# EUROPEAN PATENT APPLICATION

(11) **EP 4 108 504 A1**
(43) Date of publication of application: **28.12.2022**
(21) Application number: 22170501.5
(22) Date of filing: 28.04.2022
(51) Int. Cl.: B60L 15/20, B60W 40/09, B62K 1/00, B62M 6/45

(54) **METHOD AND DEVICE FOR SELF-ADAPTIVELY ADJUSTING DRIVE TORQUE OF TWO-WHEELED ELECTRIC VEHICLE**

(30) Priority: 25.06.2021 CN 202110708818
(71) Applicant: Bosch Automotive Products (Suzhou) Co., Ltd., Jiangsu 215021 (CN)
(72) Inventor: YU, Yin, Suzhou, Jiangsu, 215021 (CN)
(74) Representative: Bee, Joachim

(57) **Abstract**

The present invention relates to the field of two-wheeled electric vehicle control. The present invention provides a method for self-adaptively adjusting a drive torque of a two-wheeled electric vehicle, the method comprising the following steps: S1: while the two-wheeled electric vehicle is travelling, acquiring a speed demand of a user that is capable of reflecting an acceleration habit of the user, and in response to the speed demand, controlling the two-wheeled electric vehicle to output a drive torque according to a current torque response mode; and S2: adjusting the current torque response mode of the two-wheeled electric vehicle according to speed demands of a period of time, so that the current torque response mode changes to conform to the acceleration habit of the user. The present invention further relates to a device for self-adaptively adjusting a drive torque of a two-wheeled electric vehicle, a two-wheeled electric vehicle and a computer program product. The aim of the present invention is to gradually calibrate the acceleration characteristics of the two-wheeled electric vehicle towards individualized user habits by collecting acceleration habits of the user during normal riding and adjusting dynamic characteristics of drive torque on this basis.

## Description

### Technical field

The present invention relates to a method for self-adaptively adjusting a drive torque of a two-wheeled electric vehicle, a device for self-adaptively adjusting a drive torque of a two-wheeled electric vehicle, a two-wheeled electric vehicle and a computer program product.

### Background art

Existing two-wheeled electric vehicles can achieve a desired output response of electric machine torque and rotation speed based on an operation performed by a user on a speed adjustment twist grip (throttle). An electric machine controller adjusts the electric machine torque output to change according to an inherent default value set by software, based on a single user twist grip signal, and this means that the rate of change of the torque is the same each time. Thus, regardless of how fast the user twists the speed adjustment twist grip, the resulting feeling of acceleration will be similar.

As two-wheeled electric vehicle technology develops, people are demanding more of electric vehicles in terms of control technology and auxiliary functions. Different groups of users often have different riding styles and acceleration preferences; for example, female users generally demand that the electric vehicle have gentler and more comfortable acceleration, whereas male users demand that the electric vehicle have faster acceleration. However, if software parameters have already been preset to fixed values, it is very difficult for a simplistic acceleration function to satisfy different users' demands.

Thus, it is hoped to improve the existing torque control scheme, in order to further improve the user experience.

### Summary of the invention

An object of the present invention is to provide a method for self-adaptively adjusting a drive torque of a two-wheeled electric vehicle, a device for self-adaptively adjusting a drive torque of a two-wheeled electric vehicle, a two-wheeled electric vehicle and a computer program product, in order to solve at least some of the problems in the prior art.

According to a first aspect of the present invention, a method for self-adaptively adjusting a drive torque of a two-wheeled electric vehicle is provided, the method comprising the following steps:
step 1: while the two-wheeled electric vehicle is travelling, acquiring a speed demand of a user that is capable of reflecting an acceleration habit of the user, and in response to the speed demand, controlling the two-wheeled electric vehicle to output a drive torque according to a current torque response mode; and
step 2: adjusting the current torque response mode of the two-wheeled electric vehicle according to speed demands of a period of time, so that the current torque response mode changes to conform to the acceleration habit of the user.

The present invention in particular comprises the following technical concept: by collecting acceleration habits of the user and adjusting the response mode of drive torque on this basis, the acceleration characteristics of the two-wheeled electric vehicle can gradually be calibrated towards individualized user habits, so that different user groups are no longer faced with simplistic factory standards, thus a smart control scheme capable of flexibly switching drive styles is provided. In addition, from the perspective of control of the two-wheeled electric vehicle, the speed demand of the user is a parameter that must be monitored by the system anyway, thus it is only necessary to fully utilize existing equipment to probe behavioural preferences while the user is riding normally, with no need to separately set up a detection scenario and detection apparatus for this purpose, thus costs are greatly reduced.

Optionally, different torque response modes comprise different rates of change of drive torque, extents of change of drive torque and/or drive torque response times.

Here, the following technical advantage is in particular realized: The rate of change, extent of change and response time of drive torque are physical quantities that can be easily adjusted within the scope of the torque response mode and which have a decisive effect on the overall acceleration style of the two-wheeled electric vehicle, thus the difficulty of calibration of self-adaptive parameters can be reduced, thereby increasing operability.

Optionally, in step 2, the current torque response mode is adjusted according to an extent and duration of one operation or multiple consecutive operations performed by a user on a speed adjustment mechanism, in particular a twist grip.

Here, the following technical advantage is in particular realized: The extent and speed of operation of the speed adjustment mechanism by the user can often directly reflect the general riding style of the user. For example, in the case of a user with fast speed change requirements, the extent to which the twist grip is adjusted each time will also often be large, and the rate at which the twist grip is adjusted each time will also be fast.

Optionally, in step 2, the current torque response mode is adjusted according to the speed demand only when the extent of operation of the speed adjustment mechanism by the user is greater than a predetermined extent value and/or when the number of times the user operates the speed adjustment mechanism is greater than a first predetermined number of times, the predetermined extent value being greater than 0.1 of a maximum extent of operation, and the first predetermined number of times being greater than 1.

Optionally, in step 2, the current torque response mode is adjusted according to speed demands made a second predetermined number of times most recently, the second predetermined number of times being greater than 3.

Here, the following technical advantage is in particular realized: Single or individual instances of speed change behaviour cannot stably reflect the overall acceleration habits of the user, so by specifying a time interval and a number of operations, it is in particular possible to prevent individual cases from interfering with the judgement of the system as a whole, thus the reliability of the result is increased.

Optionally, step 2 comprises a long-term habit forming mode and a fine adjustment mode; the predetermined extent value, first predetermined number of times and/or second predetermined number of times defined in the long-term habit forming mode are greater than the predetermined extent value, first predetermined number of times and/or second predetermined number of times defined in the fine adjustment mode.

Here, the following technical advantage is in particular realized: A torque response mode that roughly conforms to the user's acceleration habit can be obtained by rough adjustment using a large step length or long time in the long-term habit forming mode first, and it is then possible in the fine adjustment mode to dynamically adapt to habit changes of the user at different times or in different scenarios.

Optionally, different weights or priorities are assigned to the extent of operation and duration of operation, and the different weights or priorities of the extent of operation and duration of operation are taken into account when generating a control signal.

Here, the following technical advantage is in particular realized: The degree to which the extent of operation and duration of operation are representative of the user's acceleration habit might be different in different application scenarios, so by assigning weights or priorities to them, it is possible to reflect the user's preferences more clearly while taking these two influencing factors into account in a comprehensive manner, and avoid discrimination errors as much as possible.

Optionally, in step 2, the torque response mode comprises a radical mode and a gentle mode; in the radical mode, the drive torque is controlled such that a rate of change of drive torque and extent of change of drive torque are increased and/or a drive torque response time is reduced in comparison with the gentle mode; in the gentle mode, the drive torque is controlled such that the rate of change of drive torque and extent of change of drive torque are reduced and/or the drive torque response time is increased in comparison with the radical mode.

Here, the following technical advantage is in particular realized: By defining torque response modes for different speed demands, it is only necessary to perform fuzzy classification according to the recorded acceleration habit, with no need to perform specific parameter matching again for each user; thus, the algorithm convergence process is accelerated, and the difficulty of self-adaptive parameter adjustment is simplified.

Optionally, the torque response mode is classified as the radical mode when the extent of operation of the speed adjustment mechanism by the user is greater than a preset value and the duration of operation is less than a preset time, and the torque response mode is classified as the gentle mode when the extent of operation of the speed adjustment mechanism by the user is less than a preset value and the duration of operation is greater than a preset time.

Here, the following technical advantage is in particular realized: When the user performs multiple minor, slow operations on the speed adjustment mechanism, a more conservative acceleration habit of the user is reflected by the actuation amount and actuation time, therefore the torque response mode can correspondingly be classified as the gentle mode. When the user performs multiple major, fast operations on the speed adjustment mechanism, a more violent acceleration habit of the user is reflected by the actuation amount and actuation time, therefore the torque response mode can correspondingly be classified as the radical mode. By taking into account the two behavioural characteristics of the user at the same time, it is possible to perform torque response mode determination more accurately, thus increasing the reliability.

Optionally, in step 2, a desired torque response mode of drive torque that conforms to the acceleration habit of the user is generated according to the speed demand, a check is performed to ascertain whether there is deviation between the desired torque response mode of drive torque and the current torque response mode, and the current torque response mode is corrected in response to the deviation, in order to reduce the deviation.

Here, the following technical advantage is in particular realized: The adjustment process can be performed in a more targeted manner by a feedback learning method, in order to make the torque response mode conform more closely to the user's habit.

Optionally, the speed demand is inputted to a trained artificial neural network, and the desired torque response mode is outputted by means of the artificial neural network.

Optionally, the method further comprises the following steps: for a user identity, storing information relating to acceleration habit in a cloud server and/or local storage, and when the corresponding user identity is identified, calling the information relating to acceleration habit from the cloud server and/or from the local storage.

Here, the following technical advantage is in particular realized: By calling data directly with the aid of a person's identity, an initial framework of a parameter model can be quickly established on the basis of full utilization of historical prior knowledge based on Big Data, then the parameter model is finely adjusted on the basis of specific user habits and preferences, so as to obtain an optimally matched torque response mode by calibration. Because the overall framework of the parameter model has already been estimated, and only needs to be calibrated for the details, the time expenditure of the initial learning stage is vastly reduced, thus increasing the degree of user satisfaction.

Optionally, torque response modes of drive torque are stored for speed demands of the user in different speed intervals, and when different speed intervals are entered, the torque response modes of drive torque that correspond to the speed intervals are called.

Here, the following technical advantage is in particular realized: The riding style of the same user often differs in different speed intervals; by taking this point into account, it is possible to adapt the torque response mode not only to the user's overall riding style, but also to habit changes of the user in different time periods and scenarios in a more detailed fashion, thus further increasing the degree of user satisfaction.

Optionally, the method further comprises the following steps: acquiring at least one environmental variable, and correcting the response mode of drive torque with the aid of the environmental variable, the environmental variable comprising: road surface conditions, positioning information, weather conditions, tyre condition, and personal state information of the user.

Here, the following technical advantage is in particular realized: By introducing an external environmental variable, it is possible to take into account interference caused to the final result by environmental factors, so that the finally generated torque response mode is more reliable.

According to a second aspect of the present invention, a device for self-adaptively adjusting a drive torque of a two-wheeled electric vehicle, the device being used to perform the method according to the first aspect of the present invention, and the device comprising:
an acquisition module, configured to be able to acquire a speed demand of a user that is capable of reflecting an acceleration habit of the user; and
a control module, configured to be able to control the two-wheeled electric vehicle to output a drive torque according to a current torque response mode in response to the speed demand, and the control module being further configured to be able to adjust the current torque response mode of the two-wheeled electric vehicle according to speed demands of a period of time, so that the current torque response mode changes to conform to the acceleration habit of the user.

According to a third aspect of the present invention, a two-wheeled electric vehicle, in particular an electric motorcycle or an electric bicycle, is provided, the two-wheeled electric vehicle comprising:
a speed adjustment mechanism, for receiving a speed demand of a user;
the device according to the second aspect of the present invention, for acquiring a speed demand outputted by the user by means of the speed adjustment mechanism and generating a control signal for adjusting a torque response mode of drive torque; and
an electric machine, for changing the torque response mode of output torque by means of the control signal.

According to a fourth aspect of the present invention, a computer program product is provided, wherein the computer program product comprises a computer program, the computer program being used to implement the method according to the first aspect of the present invention when executed by a computer.

### Brief description of the drawings

The present invention is described in greater detail below with reference to the drawings, to afford a better understanding of the principles, characteristics and advantages of the present invention. The drawings include:
Fig. 1 shows a block diagram of a two-wheeled electric vehicle according to an exemplary embodiment of the present invention; this two-wheeled electric vehicle comprises a device for self-adaptively adjusting a drive torque of a two-wheeled electric vehicle according to the present invention.
Fig. 2 shows a flow chart of a method for self-adaptively adjusting a drive torque of a two-wheeled electric vehicle according to an exemplary embodiment of the present invention.
Fig. 3 shows a flow chart of a method for self-adaptively adjusting a drive torque of a two-wheeled electric vehicle according to another exemplary embodiment of the present invention.
Fig. 4 shows a flow chart of a method for self-adaptively adjusting a drive torque of a two-wheeled electric vehicle according to another exemplary embodiment of the present invention.
Fig. 5 shows user acceleration habits and corresponding torque response modes, for a conventional torque control scheme and the torque control scheme according to the present invention, respectively.
Fig. 6 shows user acceleration habits and torque response modes for different speed intervals; and
Figs. 7a - 7b show multiple torque response modes according to different exemplary classification standards.

### Detailed description of the invention

To clarify the technical problem to be solved by the present invention and the technical solution and beneficial technical effects thereof, the present invention is explained in further detail below with reference to the drawings and multiple exemplary embodiments. It should be understood that the specific embodiments described here are merely intended to explain the present invention, not to limit the scope of protection thereof.

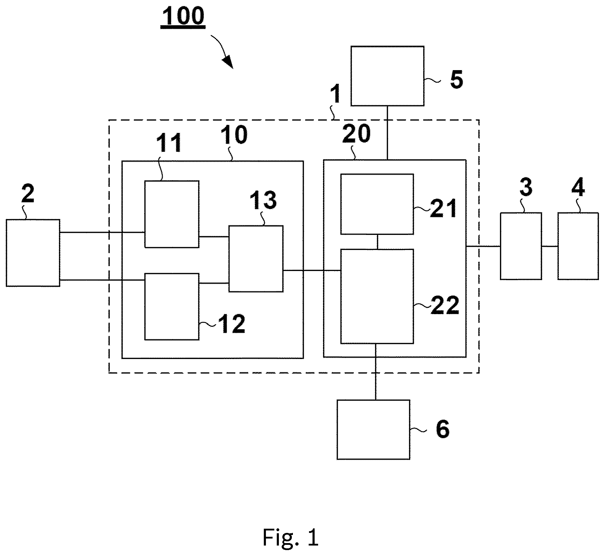

Fig. 1 shows a block diagram of a two-wheeled electric vehicle 100 according to an exemplary embodiment of the present invention; this two-wheeled electric vehicle comprises a device 1 for self-adaptively adjusting a drive torque of a two-wheeled electric vehicle according to the present invention. In addition, the two-wheeled electric vehicle 100 further comprises a speed adjustment mechanism 2, an electric machine control unit 3 and an electric machine 4. Here, although the electric machine control unit 3 and the device 1 according to the present invention are shown as separate devices, it is also possible for the device 1 to be integrated in the electric machine control unit 3 in the form of software, hardware or a combination of software and hardware.

In the sense of the present invention, the two-wheeled electric vehicle 100 for example comprises a two-wheeled vehicle capable of being driven by electricity, such as an electric motorcycle, an electric bicycle or an electric scooter. Depending on the type of two-wheeled electric vehicle, the speed adjustment mechanism 2 may be constructed as a speed adjustment twist grip, an actuating pedal, a speed adjustment push-button, a speed adjustment touch screen or any other mechanism capable of receiving a speed change requirement inputted by a user.

The device 1 comprises an acquisition module 10 and a control module 20. The acquisition module 10 comprises a read unit 11, which is configured to read a speed demand of a user from the speed adjustment mechanism 2 and simultaneously record an acceleration habit of the user when the user issues the speed demand. The speed demand may for example be a twist operation performed by a rider on an acceleration twist grip while riding. To realize this recording, the read unit 11 may comprise a position sensor (e.g. a rotation angle sensor), in order to detect the amount by which the twist grip position changes each time the user adjusts the twist grip, and convert this amount to a voltage signal. In addition, the acquisition module 10 further comprises a timer 12 (or a rotation rate sensor), in order to detect an operation duration or operation rate when the user adjusts the twist grip. Once these two speed demand signals capable of reflecting the user's acceleration habit have been obtained, they are transmitted to a merging unit 13 of the acquisition module 10; a counter and a cache are for example arranged here, and it is thus possible to cache user behaviour data for a period of time, and when the cumulatively recorded user behaviour reaches a predetermined number of times and/or the extent to which the user operates the twist grip exceeds a predetermined extent value, transmit merged user behaviour data to the control module 20.

The control module 20 for example comprises a storage unit 21 and a classification unit 22. Multiple torque response modes are stored in the storage unit 21, in such a way as to be bound to the user's identity. Here, the storage unit 21 may for example comprise a local memory and a cloud server; depending on the type of two-wheeled electric vehicle and the application scenario (domestic transport or shared transport), user torque response modes may be selectively shared with a cloud platform or stored locally. In the sense of the present invention, different torque response modes in particular comprise different rates of change of drive torque; however, different torque response modes may also optionally be embodied as different extents of change of drive torque and/or different drive torque response times. By receiving user identity information from a user identity recognition unit 5 (e.g. a fingerprint, voice or key recognition unit), it is possible to directly call acceleration habit information (e.g. a torque response mode) corresponding to the user identity from a historical record, and thereby achieve rapid matching, with no need to perform complete parameter calibration again. After receiving corresponding behaviour data from the acquisition module 10, the classification unit 22 begins to classify the user's acceleration habit according to these behaviour data, and thereby locates a torque response mode conforming to the user's acceleration habit. At the same time, the classification unit 22 also communicates with an external environment detection unit 6, and is thus able to correct the torque response mode while taking into account specific environmental variables. Such environmental variables include: road surface conditions, positioning information, weather conditions, tyre condition, and personal state information of the user (e.g. weight and position of centre of mass).

Once a torque response mode conforming to the user's habit has been determined, this torque response mode is for example transmitted to the electric machine drive unit 3 (e.g. a PWM circuit of the electric machine drive unit) as a control signal, thereby generating a signal (e.g. PWM increment and incremental rate of change) capable of directly causing a change in the output torque of the electric machine 4.

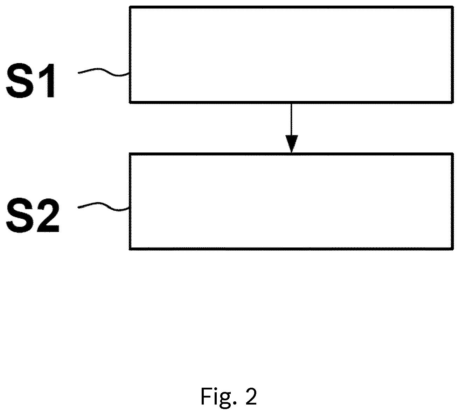

Fig. 2 shows a flow chart of a method for self-adaptively adjusting a drive torque of a two-wheeled electric vehicle according to an exemplary embodiment of the present invention.

In step S1, while a two-wheeled electric vehicle is travelling, a speed demand of a user that is capable of reflecting an acceleration habit of the user is acquired, and in response to the speed demand, the two-wheeled electric vehicle is controlled to output a drive torque according to a current torque response mode. Here, the speed demand may for example be reflected by the extent to which the user operates a speed adjustment mechanism and the duration of operation (or rate of operation) thereof. Because the user's acceleration habit is recorded at the same time as the user issues a speed change requirement instruction, there is in particular no need to separately provide additional equipment for this purpose (e.g. a speed sensor, acceleration sensor, inertia sensor, etc.) to record the user's riding style preference; thus, not only is hardware expenditure reduced, but the self-adaptation process will also not place an excessive burden on the user's normal riding process. Depending on the type and structure of the two-wheeled electric vehicle, the speed demand may also be embodied by an actuation amount and actuation time of an actuating pedal, the depth to which a push-button is pressed and the duration of operation thereof, or the extent of a trajectory on a touch screen and a hover time thereon.

In step S2, the current torque response mode of the two-wheeled electric vehicle is adjusted according to speed demands of a period of time, so that the current torque response mode changes to conform to the user's acceleration habit. Here, different torque response modes may in particular be characterized by different rates of change of drive torque in a more intuitive manner, because such rates of change of torque are directly related to the overall acceleration characteristics of the two-wheeled electric vehicle. In addition to rates of change of torque, different torque response modes may also be embodied as different extents of change of torque and/or different torque response times. The rate of change of torque is for example understood to be the amount that the drive torque changes within unit time, and can be adjusted by changing the PWM incremental rate of change. The extent of change of torque is understood to be the change in drive torque caused in particular by unit extent of operation of the speed adjustment mechanism. The response time is understood to be the reaction time from operation of the speed adjustment mechanism by the user until the change in torque begins to be produced.

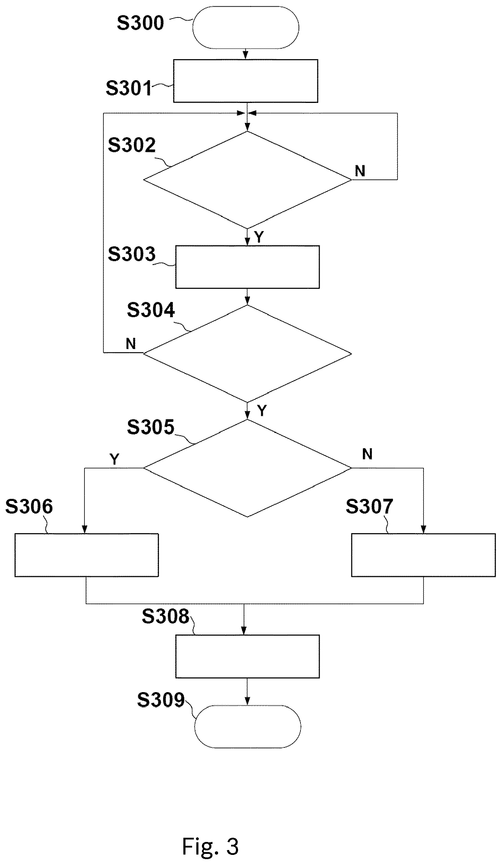

Fig. 3 shows a flow chart of a method for self-adaptively adjusting a drive torque of a two-wheeled electric vehicle according to another exemplary embodiment of the present invention.

In step S300, the method starts.

In step S301, monitoring of user behaviour data is activated. For example, after identifying that a user has unlocked the two-wheeled electric vehicle with a key, a position sensor and a timer arranged at the speed adjustment mechanism can be caused to enter an operational mode from a standby mode.

In step S302, a judgement is made as to whether the user has a speed demand. As an example, a judgement may be made as to whether the user is identified as having generated a voltage signal or a voltage signal exceeding a preset range by operating the speed adjustment mechanism (e.g. twist grip). Here, for example, an electric machine no-load rotation speed corresponding to a twist grip voltage of 1.2 V is 0 RPM, an electric machine no-load rotation speed corresponding to 3.3 V is 600 RPM, and voltages between 1.2 V and 3.3 V correspond linearly to rotation speed according to voltage, so the maximum speed value corresponds to 600 RPM, and a voltage signal used to produce a speed demand must be at least greater than a voltage value corresponding to a vehicle speed of 60 RPM.

If there is no speed demand, then the method returns to step S302, and monitoring of user behaviour is continued.

If there is a speed demand, then in step S303, an acceleration habit of the user is recorded at the same time as the speed demand of the user is acquired. As an example, the extent to which the user operates the twist grip and the duration of operation (or rate of operation) thereof may be recorded.

In step S304, the number of times that the user operates the twist grip, in particular operates the twist grip consecutively, is counted, and a judgement is made as to whether a predetermined number of times, e.g. 5 times, has been reached. Here, the predetermined number of times may be counted cumulatively from when the two-wheeled electric vehicle was started, but may also merely mean the most recent few speed demands.

If the predetermined number of times has not yet been reached, this indicates that the number of samples of user behaviour data collected at the present time is not yet representative, so the method returns to step S302 from step S304.

If the predetermined number of times has already been reached, then in step S305, currently recorded data of multiple consecutive operations performed by the user on the twist grip is extracted, and a torque response mode is classified on this basis. Here, for example, the extents and durations of operation of the twist grip the predetermined number of times may be added together, in order to obtain a total extent of operation and a total duration of operation. The total extent of operation and the total duration of operation are then separately compared with corresponding reference thresholds under preset conditions, so as to judge whether the respectively corresponding thresholds for the extent of operation and duration of operation have been respectively exceeded. It is also possible to separately perform this judgement for each twist grip operation that has already occurred.

As an example, the following judgements may be made consecutively in step S305: for the predetermined number of times, whether the change in twist grip voltage recorded each time exceeds 2.1 V, and whether the duration of twist grip operation recorded each time is within 100 ms.

If so, then in step S306, the torque response mode is adjusted to a radical mode. In this mode, the rate of change of drive torque and the extent of change of drive torque within the current drive torque are increased and/or the drive torque response time is reduced. This means that if the user twist grip voltage change times are all very short and the voltage change extents are all very large in the data recorded on the most recent 5 occasions, a more radical riding style is manifested. Riders of this type will wish to achieve a sharper change in speed by twisting the grip rapidly to a large extent. Thus, in this case, the system will automatically adjust and accelerate the rate of change and the extent of change of the electric machine torque and/or reduce the response time, so that the user experiences a feeling of faster acceleration.

If it is judged that the extent of change of each twist grip voltage signal is smaller and the duration of operation is longer, then in step S307, the torque response mode is adjusted to a gentle mode. In this mode, the rate of change of drive torque and the extent of change of drive torque are reduced and/or the drive torque response time is increased. This means that on each occasion, the user operates the twist grip slowly to a smaller extent, therefore a more conservative riding style is manifested. Riders of this type will wish to transition smoothly to a desired speed value by adjusting the speed to a small extent multiple times, and will not wish to experience sudden changes in speed. Thus, in this case, the system will automatically adjust and reduce the rate of change and the extent of unit change of the electric machine torque and/or increase the response time, so that the user experiences a feeling of gentler and smoother acceleration.

Once a suitable torque response mode has been determined in step S306 or S307, parameters of the current torque response mode are updated to parameters of the determined torque response mode in step S308, and control of the electric machine is then continued with the updated parameters.

Finally, the method ends in step S309.

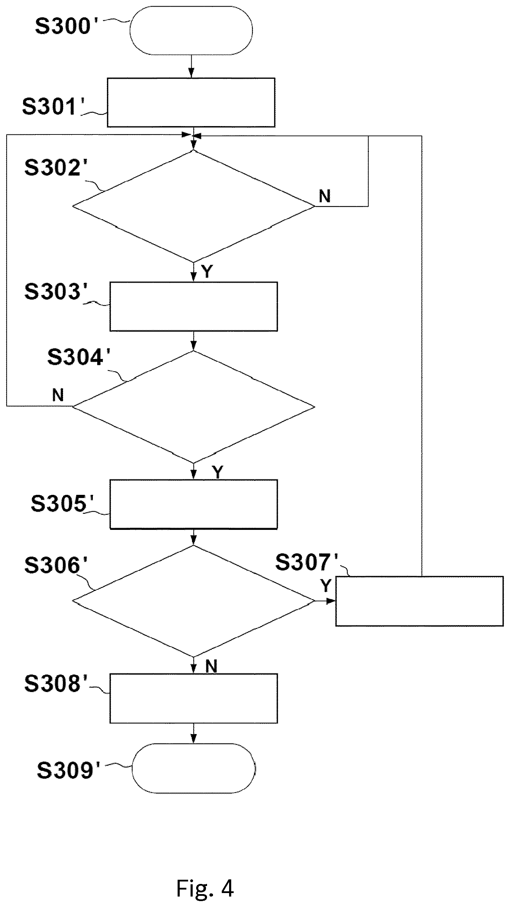

Fig. 4 shows a flow chart of a method for self-adaptively adjusting a drive torque of a two-wheeled electric vehicle according to another exemplary embodiment of the present invention. Steps S300' to S304' in Fig. 4 correspond to steps S300 to S304 in Fig. 3.

Fig. 4 differs from the embodiment in Fig. 3 in the following way: in the process of self-adaptive adjustment of torque response mode parameters, the torque response mode is no longer classified on the basis of acquired user behaviour data. Here, in step S305', a desired torque response mode of drive torque is generated directly on the basis of an acquired speed demand. As an example, it is possible to determine an adjustment direction of the rate of change of torque on the basis of the extent of operation and the duration of operation, and then adjust the rate of change of torque in the desired adjustment direction in each cycle.

In step S306', for example, a judgement may be made as to whether there is deviation between the desired torque response mode and the current torque response mode, based on feedback behaviour of the user. As an example, after each adjustment of the torque response mode, the degrees of positive feedback behaviour and negative feedback behaviour of the user and/or the number of times they occur are recorded within a period of time, and a determination is made on this basis as to whether there is deviation and in which direction it is then necessary to perform deviation correction. For example, the following behaviour of the user is defined as a positive feedback event: after the current torque response mode of drive torque has been applied, a subsequent speed demand of the user exhibits an acceleration habit consistent with an original acceleration habit, and/or the user confirms the saving of the current torque response mode by means of a defining operation. Conversely, the following behaviour of the user is defined as a negative feedback event: after the current torque response mode of drive torque has been applied, a subsequent speed demand of the user exhibits an acceleration habit different from an original acceleration habit, and/or the user does not confirm the saving of the current torque response mode by means of a defining operation.

If it is determined that there is deviation, then in step S307', the torque response mode is adjusted on the basis of this deviation.

If there is no deviation, this indicates that the current torque response mode is already matched to the user's acceleration habit, so in step S308', the current setting is saved and used to drive the electric machine.

Finally, the method ends in step S309'.

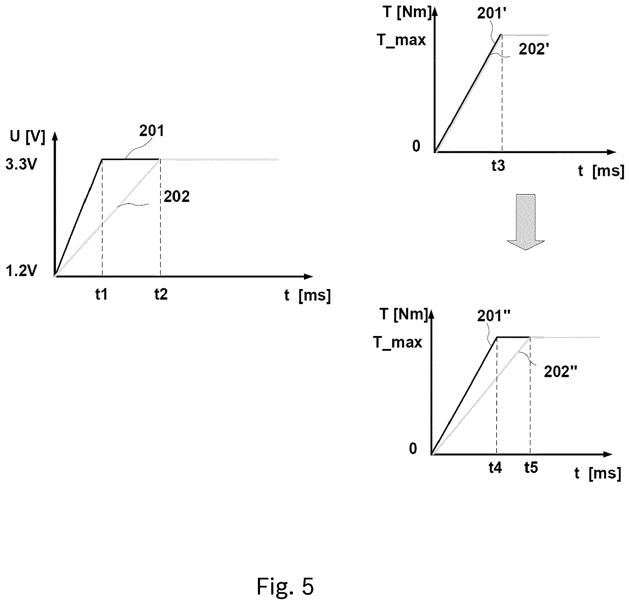

Fig. 5 shows user acceleration habits and corresponding drive torque response modes, for a conventional torque control scheme and the torque control scheme according to the present invention, respectively.

Speed demands capable of reflecting user acceleration habits are shown at the left side of Fig. 5. Here, speed demands and acceleration habits of a user A and a user B are reflected demonstratively by recording twist grip voltage change curves 201, 202. As shown in the left side of Fig. 5, for a given extent of operation, in particular a given change in twist grip voltage, the duration t1 of operation of the twist grip by user A is obviously shorter than the duration t2 of operation by user B. This can reflect the difference between user A and user B in terms of riding style very well: compared to user A, user B does not wish to accelerate rapidly to a target speed, but prefers to transition to the target speed gently.

A torque output response without adjustment by the method according to the present invention is shown at the top right in Fig. 5. Here, torque change curves 201', 202' of user A and user B are shown demonstratively. As can be seen, without matching of the torque response mode, the same torque output result will be obtained even though the acceleration habits of user A and user B are different; thus, the curves 201', 202' reach a target torque value T_max at the same moment t3.

Torque output responses after adjustment by the method according to the present invention are shown at the bottom right in Fig. 5. Here, torque change curves 201", 202" of user A and user B are shown demonstratively. As can be seen, curve 201" reaches the target torque value T_max first at moment t4, whereas curve 202" only reaches the target torque value T_max at subsequent moment t5. Thus, after torque response mode adjustment, even if user A and user B have the same speed demand, they will perceive different acceleration characteristics, and it is thus possible to satisfy diverse riding styles of different users.

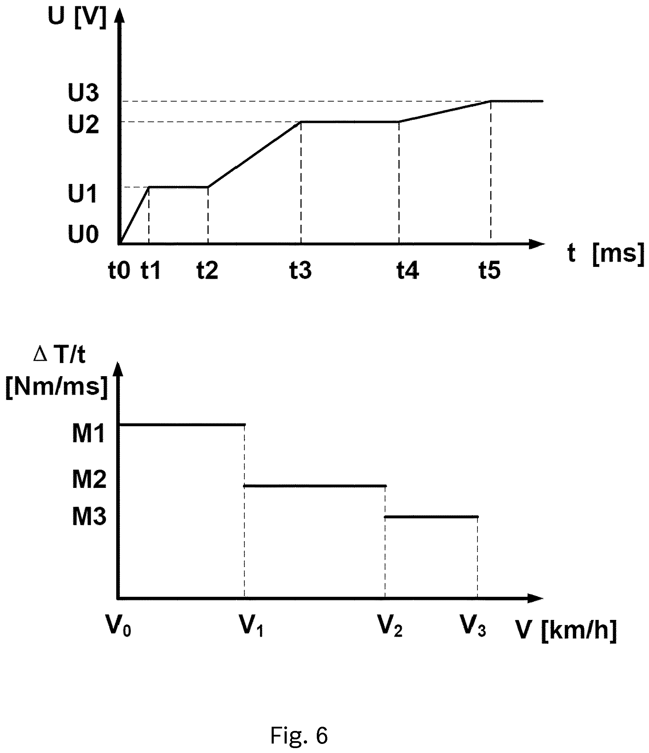

Fig. 6 shows user acceleration habits and torque response modes for different speed intervals. Variation in acceleration habits of the same user in different speed intervals is shown at the top of Fig. 6. Here, variation in the user's riding speed is reflected demonstratively by a twist grip voltage variation curve. Within a time interval [t0, t2], the user's twist grip voltage is in [U0, U1], and correspondingly, the user's riding speed is within a first speed interval [V0, V1]; during this time, the duration of operation of the twist grip by the user is t1 - t0. When the user's twist grip voltage is at the higher levels [U1, U2] and [U2, U3], this means that the user's speed has also correspondingly increased to the intervals [V1, V2] and [V2, V3]; when the different speed intervals are arrived at, it can be seen that the duration of operation of the twist grip by the user is increased significantly. This means that as the speed increases, the user desires ever gentler acceleration characteristics.

A torque response mode generated for this acceleration habit variation is shown at the bottom of Fig. 6. Here, this torque response mode is reflected demonstratively by the rate of change of torque. As can be seen, in the speed interval [V0, V1] corresponding to the twist grip voltage interval [U0, U1], the generated rate of change of torque is at a higher level M1. As the riding speed increases, the rate of change of torque gradually falls to M2, M3 and M4. Thus, the torque response mode is advantageously adapted to the acceleration habits of the user in different speed intervals.

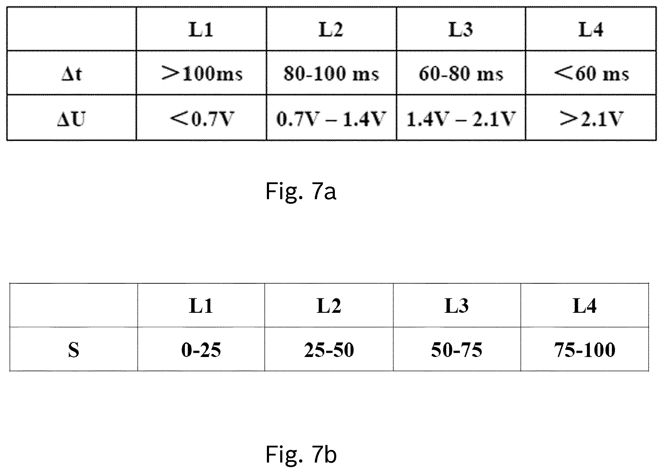

Figs. 7a - 7b show multiple torque response modes according to different exemplary classification standards.

A correspondence between recorded user behaviour data and different torque response modes L1 - L4 is shown according to a first classification standard in Fig. 7a. After collecting corresponding user behaviour data, a corresponding torque response mode may in particular be determined according to the mapping relationship shown in Fig. 7a. Demonstratively, a first torque response mode L1 represents the gentlest mode; if the duration Δt of each of a preset number of operations performed by a user on the twist grip is greater than 500 ms, and the extent of twist grip operation, e.g. the change ΔU in twist grip voltage is lower than 0.7 V, then a torque response mode corresponding to this user is classified as the first torque response mode L1. Correspondingly, when the duration Δt of twist grip operation is 400 - 500 ms, 300 - 400 ms or lower than 200 ms, respectively, and the change ΔU in twist grip voltage is 0.7 - 1.4 V, 1.4 - 2.1 V or higher than 2.1 V, respectively, then the torque response mode is classified as a second, third or fourth torque response mode L2, L3 or L4, respectively. Here, as the level of the response mode increases, the torque response mode gradually becomes more radical.

A correspondence between recorded user behaviour data and different torque response modes L1 - L4 is shown according to a second classification standard in Fig. 7b. Here, the torque response modes are no longer divided directly according to the measurement data itself (i.e. the extent of operation and the duration of operation of the twist grip); instead, the extent of operation and duration of operation are separately converted to habit fractions and weights are assigned to these, and by calculating a total habit fraction S and judging which bracket this falls into, the torque response mode can be classified. Compared with Fig. 7a, this reference standard has the advantage that all user behaviour data samples can be used as valid data samples, and will not be discarded because the measurement data cannot reflect a clear preference (e.g. because it does not conform to any interval requirement in Fig. 7a). Thus, the process of self-adaptive calibration of parameters is advantageously accelerated.

Although specific embodiments of the present invention have been described in detail here, they are given merely for explanatory purposes, and should not be regarded as limiting the scope of the present invention. Various substitutions, changes and modifications can be conceived without departing from the spirit and scope of the present invention.

## Claims

1. Method for self-adaptively adjusting a drive torque of a two-wheeled electric vehicle (100), the method comprising the following steps:
step 1 (S1): while the two-wheeled electric vehicle (100) is travelling, acquiring a speed demand of a user that is capable of reflecting an acceleration habit of the user, and in response to the speed demand, controlling the two-wheeled electric vehicle (100) to output a drive torque according to a current torque response mode; and
step 2 (S2): adjusting the current torque response mode of the two-wheeled electric vehicle (100) according to speed demands of a period of time, so that the current torque response mode changes to conform to the acceleration habit of the user.

2. Method according to Claim 1, wherein different torque response modes comprise different rates of change of drive torque, extents of change of drive torque and/or drive torque response times; and/or
in step 2 (S2), the current torque response mode is adjusted according to an extent and duration of one operation or multiple consecutive operations performed by a user on a speed adjustment mechanism (2), in particular a twist grip.

3. Method according to Claim 2, wherein in step 2 (S2), the current torque response mode is adjusted according to the speed demand only when the extent of operation of the speed adjustment mechanism (2) by the user is greater than a predetermined extent value and/or when the number of times the user operates the speed adjustment mechanism (2) is greater than a first predetermined number of times, the predetermined extent value being greater than 0.1 of a maximum extent of operation, and the first predetermined number of times being greater than 1,
in particular wherein the current torque response mode is adjusted according to speed demands made a second predetermined number of times most recently, the second predetermined number of times being greater than 3.

4. Method according to Claim 3, wherein the step 2 (S2) comprises a long-term habit forming mode and a fine adjustment mode; the predetermined extent value, first predetermined number of times and/or second predetermined number of times defined in the long-term habit forming mode are greater than the predetermined extent value, first predetermined number of times and/or second predetermined number of times defined in the fine adjustment mode.

5. Method according to any one of Claims 2 - 4, wherein different weights or priorities are assigned to the extent of operation and duration of operation, and the different weights or priorities of the extent of operation and duration of operation are taken into account when generating a control signal.

6. Method according to any one of Claims 2 - 4, wherein in step 2 (S2), the torque response mode in particular comprises a radical mode and a gentle mode; in the radical mode, the drive torque is controlled such that a rate of change of drive torque and extent of change of drive torque are increased and/or a drive torque response time is reduced in comparison with the gentle mode; in the gentle mode, the drive torque is controlled such that the rate of change of drive torque and extent of change of drive torque are reduced and/or the drive torque response time is increased in comparison with the radical mode;
in particular wherein the torque response mode is classified as the radical mode when the extent of operation of the speed adjustment mechanism (2) by the user is greater than a preset value and the duration of operation is less than a preset time, and the torque response mode is classified as the gentle mode when the extent of operation of the speed adjustment mechanism (2) by the user is less than a preset value and the duration of operation is greater than a preset time.

7. Method according to any one of Claims 1 - 6, wherein in step 2 (S2), a desired torque response mode of drive torque that conforms to the acceleration habit of the user is generated according to the speed demand, a check is performed to ascertain whether there is deviation between the desired torque response mode of drive torque and the current torque response mode, and the current torque response mode is corrected in response to the deviation, in order to reduce the deviation.

8. Method according to Claim 7, wherein the speed demand is inputted to a trained artificial neural network, and the desired torque response mode is outputted by means of the artificial neural network.

9. Method according to any one of Claims 1 - 8, wherein the method further comprises the following steps: for a user identity, storing information relating to acceleration habit in a cloud server and/or local storage, and when the corresponding user identity is identified, calling the information relating to acceleration habit from the cloud server and/or from the local storage; and/or storing torque response modes of drive torque for speed demands of the user in different speed intervals, and when different speed intervals are entered, calling the torque response modes of drive torque that correspond to the speed intervals.

10. Method according to any one of Claims 1 - 9, wherein the method further comprises the following steps: acquiring at least one environmental variable, and correcting the torque response mode of drive torque with the aid of the environmental variable, the environmental variable comprising: road surface conditions, positioning information, weather conditions, tyre condition, and personal state information of the user.

11. Device (1) for self-adaptively adjusting a drive torque of a two-wheeled electric vehicle (100), the device (1) being used to perform the method according to any one of Claims 1 - 10, and the device comprising:
an acquisition module (10), configured to be able to acquire a speed demand of a user that is capable of reflecting an acceleration habit of the user; and
a control module (20), configured to be able to control the two-wheeled electric vehicle (100) to output a drive torque according to a current torque response mode in response to the speed demand, and the control module being further configured to be able to adjust the current torque response mode of the two-wheeled electric vehicle (100) according to speed demands of a period of time, so that the current torque response mode changes to conform to the acceleration habit of the user.

12. Two-wheeled electric vehicle (100), in particular an electric motorcycle or an electric bicycle, the two-wheeled electric vehicle (100) comprising:
a speed adjustment mechanism (2), for receiving a speed demand of a user;
the device (1) according to Claim 11, for acquiring a speed demand outputted by the user by means of the speed adjustment mechanism (2) and generating a control signal for adjusting a torque response mode of drive torque; and
an electric machine (4), for changing the torque response mode of output torque by means of the control signal.

13. Computer program product, wherein the computer program product comprises a computer program, the computer program being used to implement the method according to any one of Claims 1 - 10 when executed by a computer.
